# EUROPÄISCHE PATENTSCHRIFT

(11) **EP 3 960 657 B1**
(45) Veröffentlichungstag und Bekanntmachung des Hinweises auf die Patenterteilung: **27.03.2024**
(21) Anmeldenummer: 20192798.5
(22) Anmeldetag: 26.08.2020
(51) Int. Cl.: B65G 1/04, B65G 57/30

(54) **STAPELLAGERANORDNUNG**
STACK STORAGE ASSEMBLY
AGENCEMENT DE COUCHES D'EMPILAGE

(43) Veröffentlichungstag der Anmeldung: 02.03.2022
(73) Patentinhaber: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Liebhaber, Markus, 61440 Oberursel (DE); Morawietz, Timm, 66636 Tholey-Überroth (DE)
(74) Vertreter: Keil & Schaafhausen Patentanwälte PartGmbB

(56) Entgegenhaltungen:
- WO-A1-2010/097425
- CN-A- 110 861 865
- DE-A1-102018 110 440

## Beschreibung

Die vorliegende Erfindung betrifft eine Stapellageranordnung mit einer Vielzahl von Behälterstapelräumen, einem Beschickungsraum, der in Schwerkraftrichtung unterhalb der Behälterstapelräume angeordnet ist, und einem im Beschickungsraum bewegbaren Beschickungsfahrzeug, das eine Hubeinrichtung aufweist, mit der ein Behälter in einen Behälterstapelraum oder aus einem Behälterstapelraum heraus verlagerbar ist, wobei jeder Behälterstapelraum an seinem in Schwerkraftrichtung unteren Ende eine Halteeinrichtung mit mindestens einem Halteelement aufweist, das durch eine am Beschickungsfahrzeug angeordnete Betätigungseinrichtung zwischen einer Halteposition, in der es einen im Behälterstapelraum angeordneten Behälter gegen die Schwerkraft hält, und einer Freigabeposition, in der der Behälter am Halteelement vorbei verlagerbar ist, bewegbar ist, wobei das Beschickungsfahrzeug mindestens ein in eine Fixierposition verlagerbares Fixierelement aufweist, das in der Fixierposition mit einem in der Freigabeposition befindlichen Halteelement zusammenwirkt und das Halteelement in der Freigabeposition hält und das Halteelement in einem zwischen dem Behälterstapelraum und dem Beschickungsraum angeordneten Halter angeordnet ist.

Eine derartige Stapellageranordnung ist aus WO 20101097425 A1 bekannt. Wenn ein Gegenstand aus dem Behälterstapelraum entnommen werden soll, werden die Halteelemente in eine Freigabeposition verschwenkt und durch eine am Beschickungsfahrzeug angeordnete Spreizeinrichtung offengehalten, bis der zu entnehmende Gegenstand am Halteelement vorbei bewegt worden ist.

In einer derartigen Stapellageranordnung können Behälter in den Behälterstapelräumen gestapelt werden. Die Behälterstapelräume sind dabei vorzugsweise in Form einer Matrix mit Reihen und Spalten angeordnet. Wenn ein Behälter in einem Behälterstapelraum eingelagert werden soll, wird er auf der Hubeinrichtung des Beschickungsfahrzeugs angeordnet. Das Beschickungsfahrzeug fährt dann durch den Beschickungsraum, bis es sich unterhalb eines vorbestimmten oder gewünschten Behälterstapelraums befindet. Die Hubeinrichtung hebt den Behälter dann an, bis er die Halteeinrichtung passiert hat. Bei dem Anheben des Behälters wird das Halteelement in die Freigabeposition bewegt. Sobald der Behälter oder ein Teil des Behälters, der für das spätere Halten des Behälters in der Halteeinrichtung verantwortlich ist, die Halteeinrichtung passiert hat, kann das Halteelement wieder in die Halteposition verlagert werden. Wenn die Hubeinrichtung den Behälter absenkt, kommt das Halteelement in Eingriff mit dem Behälter und hält den Behälter gegen die Wirkung der Schwerkraft fest. Das Beschickungsfahrzeug kann dann unter dem entsprechenden Behälterstapelraum wegbewegt werden. Wenn sich zuvor bereits ein oder mehrere Behälter in dem Behälterstapelraum befunden haben, wird beim Anheben der Hubeinrichtung der gesamte Stapel angehoben, sobald der angehobene Behälter in Kontakt mit dem untersten Behälter des Stapels kommt. Ansonsten ist der Einlagervorgang identisch.

Beim Auslagern des Behälters aus dem Behälterstapelraum wird wieder das Beschickungsfahrzeug verwendet. Das Beschickungsfahrzeug wird unter den Behälterstapelraum gefahren und die Hubeinrichtung wird angehoben, bis sie in Kontakt mit dem untersten Behälter eines Behälterstapels in den Behälterstapelraum kommt. Die Hubeinrichtung hebt dann den Behälter, ggfs. mit dem Stapel von weiteren Behältern, die sich darauf befinden, an. Sobald die Halteeinrichtung unbelastet ist, kann das Halteelement in die Freigabeposition bewegt werden. Der Behälterstapel wird dann abgesenkt.

Allerdings muss in der Zeit, in der der untere Behälter die Halteeinrichtung passiert, das Halteelement in der Freigabeposition gehalten werden.

CN 110861865 A zeigt eine Stapellageranordnung mit Halteelementen, die von einem Antrieb zwischen einer Halteposition und einer Freigabeposition verschwenkt werden können.

DE 10 2018 110 440 A1 zeigt ein Lagersystem für Behälterstapel mit Halteelementen für die jeweils untersten Behälter eines Stapels, die als zweiarmige Hebel ausgebildet sind. Ein Behälter ruht in einer Halteposition auf einem Arm des Hebels. Der andere Arm des Hebels ist mit einem Permanentmagneten versehen, der, wenn das Halteelement in eine Freigabeposition verschwenkt worden ist, an einem Teil eines das Halteelement tragende Gestell durch Magnetkraft festgehalten wird.

Der Erfindung liegt die Aufgabe zugrunde, auf einfache Weise das Entnehmen eines Behälters aus einem Behälterstapelraum zu ermöglichen.

Diese Aufgabe wird bei einer Stapellageranordnung der eingangs genannten Art dadurch gelöst, dass das Fixierelement in einen Zwischenraum zwischen dem in der Freigabeposition befindlichen Halteelement und dem Halter bewegbar ist.

Man verwendet also zusätzlich zu der Betätigungseinrichtung, die das Halteelement in die Freigabeposition bewegt, ein Fixierelement, das am Beschickungsfahrzeug angeordnet ist. Sobald sich das Halteelement in der Freigabeposition befindet, kann es dort durch das Fixierelement fixiert werden, so dass der zu entnehmende Behälter die Halteeinrichtung passieren kann. Sobald es nicht mehr notwendig ist, dass das Halteelement in der Freigabeposition gehalten wird, kann das Fixierelement entfernt werden, so dass das Halteelement wieder in die Halteposition bewegt werden kann. Das Halteelement kann sich dann über das Fixierelement am Halter abstützen. Der Halter kann beispielsweise als Rahmen ausgebildet sein, der eine oder mehrere Öffnungen am unteren Ende eines oder mehrerer Behälterstapelräume umgibt.

Vorzugsweise weist das Beschickungsfahrzeug eine Steuereinrichtung auf, die das Fixierelement betätigt, wenn sich das Halteelement in der Freigabeposition befindet. Die Steuereinrichtung stellt also eine gewisse Reihenfolge von Abläufen sicher, wenn ein Behälter aus dem Behälterstapelraum entnommen werden soll. Zunächst muss durch die Betätigungseinrichtung das Halteelement aus der Halteposition in die Freigabeposition bewegt werden. Erst danach kann das Fixierelement betätigt werden, um das Halteelement in der Freigabeposition zu halten.

In einer bevorzugten Ausgestaltung ist das Halteelement als zweiarmiger Hebel mit einem ersten Arm, der eine Auflagefläche für einen Behälter aufweist, und einem zweiten Arm ausgebildet und das Fixierelement wirkt auf den zweiten Arm. Das Fixierelement befindet sich dann nicht unter der Auflagefläche für den Behälter und kann dadurch die Bewegung des Behälters nicht stören.

Vorzugsweise weist das Fixierelement eine sich verjüngende Spitze auf. Damit wird die Bewegung des Fixierelements erleichtert. Auch dann, wenn sich das Beschickungsfahrzeug nicht genau in einer Soll-Position unterhalb des Behälterstapelraums befindet, ist es möglich, das Fixierelement so zu bewegen, dass es mit dem in der Freigabeposition befindlichen Halteelement zusammenwirken kann.

Vorzugsweise weist der Halter eine Führung für das Fixierelement auf. Die sich verjüngende Spitze kann dann in die Führung eintreten. Bei einer weiteren Bewegung wird das Fixierelement automatisch in die gewünschte Position geführt, in der es das sich in der Freigabeposition befindliche Halteelement halten oder fixieren kann.

Hierbei ist bevorzugt, dass die Führung einen Kanal aufweist, der unterhalb des Halteelements und außerhalb eines Behälterbewegungspfades angeordnet ist. Der Kanal kann beispielsweise als Bohrung in einer Platte oder einem anderen Teil des Halters ausgebildet sein.

Vorzugsweise steht das Fixierelement in einer unbetätigten Position senkrecht zur Schwerkraftrichtung weniger weit über das Beschickungsfahrzeug vor als in einer betätigten Position. Das Fixierelement wird also, wenn es nicht zum Fixieren des Halteelements in der Freigabeposition benötigt wird, sozusagen in den Beschickungswagen eingefahren. Im Idealfall wird die Außenkontur des Beschickungswagens, also die Kontur des Beschickungswagens quer zur Schwerkraftrichtung, durch das Fixierelement in der unbetätigten Position nicht vergrößert.

Hierbei ist bevorzugt, dass das Fixierelement in einer am Beschickungsfahrzeug ausgebildeten Kurvenführung geführt ist. Dies ist eine einfache Möglichkeit, um Fixierelemente beim Anheben gegen die Schwerkraftrichtung aus der Kontur des Beschickungsfahrzeugs herauszubewegen und beim Absenken in Schwerkraftrichtung wieder in den Raum innerhalb der Kontur des Beschickungsfahrzeugs einzuführen. Das Beschickungsfahrzeug selbst kann dann relativ genau auf die Bedürfnisse im Beschickungsraum hin ausgelegt werden, beispielsweise darauf, dass die Behälterstapelräume seitlich von Stützen begrenzt sind, die bis zu einem Boden reichen, auf dem das Beschickungsfahrzeug im Beschickungsraum bewegbar ist.

Vorzugsweise weist die Hubeinrichtung einen Hubrahmen mit einer Behälteraufstandsfläche auf, wobei der Hubrahmen zumindest einen Teil der Betätigungseinrichtung bildet. Man benötigt beispielsweise keine weiteren bewegbaren Elemente mehr, um das Halteelement aus der Halteposition in die Freigabeposition zu bewegen. Wenn ein Behälter in einen Behälterstapelraum eingelagert wird, dann wird das Halteelement durch den Behälter selbst geöffnet, wenn der Behälter angehoben wird. Wenn der Behälter aus dem Beschickungsraum entnommen werden soll, dann wird das Halteelement durch den Hubrahmen geöffnet und durch das Fixierelement in einer geöffneten Position, d.h. in der Freigabeposition, gehalten.

Die Erfindung wird im Folgenden anhand eines bevorzugten Ausführungsbeispiels in Verbindung mit der Zeichnung beschrieben. Hierin zeigen:
- Fig. 1: eine perspektivische schematische Ansicht einer Stapellageranordnung,
- Fig. 2: eine perspektivische Darstellung einer Rahmenanordnung am unteren Ende von Behälterstapelräumen,
- Fig. 3: ein zur Stapellageranordnung gehörendes Beschickungsfahrzeug,
- Fig. 4: eine schematische Darstellung einer Fixiereinrichtung mit Fixierelementen,
- Fig. 5: eine schematische Darstellung zur Erläuterung der Bewegung eines Fixierelements,
- Fig. 6: eine Darstellung zur Erläuterung der Einlagerung eines Behälters in einen Behälterstapelraum,
- Fig. 7: eine schematische Darstellung zur Erläuterung einer Entnahme eines Behälters aus einem Behälterstapelraum und
- Fig. 8: eine schematische Darstellung zur Erläuterung der Wirkungsweise des Fixierelements.

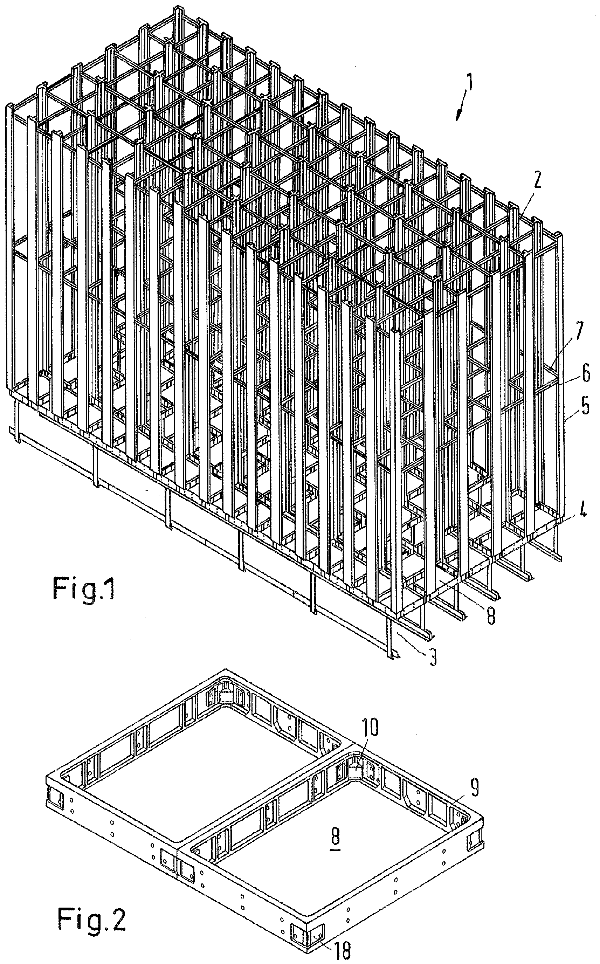

Fig. 1 zeigt eine Stapellageranordnung 1 mit einer Vielzahl von Behälterstapelräumen 2. Am in Schwerkraftrichtung unteren Ende der Behälterstapelräume 2 ist ein Beschickungsraum 3 angeordnet. Zwischen dem Beschickungsraum 3 und den Behälterstapelräumen 2 ist eine Rahmenanordnung 4 vorgesehen.

Die Stapellageranordnung 1 weist eine Vielzahl von vertikal angeordneten Streben 5 auf, die durch horizontale Querstreben 6, 7 miteinander verbunden sind.

Am unteren Ende eines jeden Behälterstapelraums 2 ist eine Öffnung 8 ausgebildet, die in der Rahmenanordnung 4 vorgesehen ist. Hierzu weist die Rahmenanordnung 4 mehrere Halter 9 in Form von Rahmenelementen auf, die beispielsweise miteinander verschraubt sein können. In jeder Ecke des Rahmenelements sind Halteelemente 10 angeordnet. Die vier Halteelemente eines Rahmenelements bilden dann eine Halteeinrichtung. Die Halteelemente 10 und ihre Funktion werden weiter unten näher erläutert.

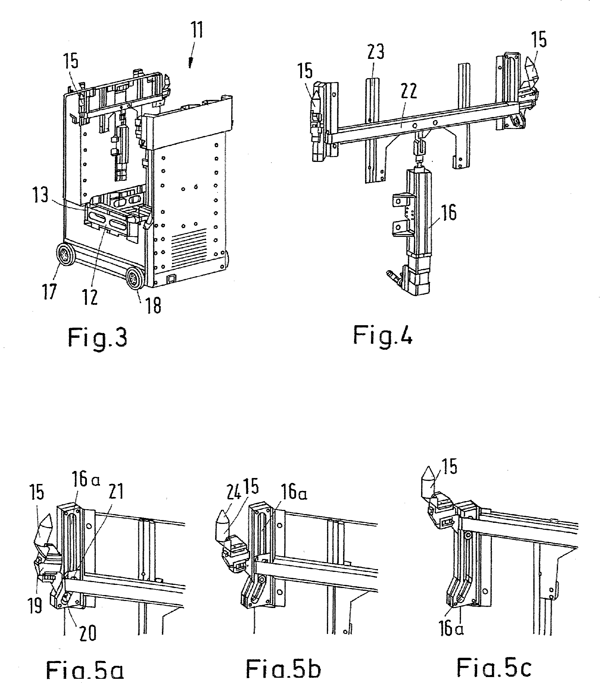

Aus Gründen der Übersicht ist in Fig. 1 ein Beschickungsfahrzeug 11, das zur Stapellageranordnung 1 gehört, nicht dargestellt. Das Beschickungsfahrzeug 11 ist in Fig. 3 dargestellt.

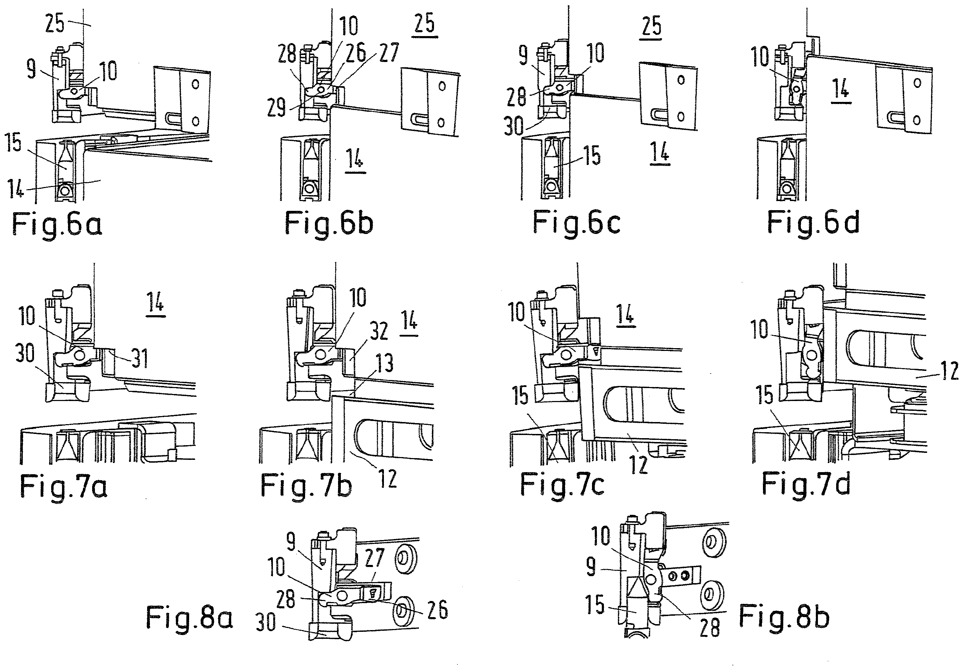

Das Beschickungsfahrzeug 11 weist einen Hubrahmen 12 auf, der über einen nicht näher dargestellten Hubantrieb angehoben und abgesenkt werden kann. Der Hubrahmen 12 weist eine Behälteraufstandsfläche 13 auf, auf die ein in den Fig. 6 und 7 dargestellter Behälter 14 aufgesetzt werden kann.

Zusätzlich zu der Hubplattform 12 und ihrem Hubantrieb weist das Beschickungsfahrzeug 11 noch mehrere Fixierelemente 15 auf, die über einen Fixierelementantrieb 16 angehoben und abgesenkt werden können. Das Beschickungsfahrzeug 11 weist weiterhin mehrere Räder 17, 18 auf, mit denen das Beschickungsfahrzeug 11 im Beschickungsraum 3 verfahren werden kann.

Jedes Fixierelement 15 ist in einer Kurvenführung 16a geführt. Das Fixierelement 15 ist dabei an einem Träger 19 angeordnet, der über zwei Rollen 20, 21 in der Kurvenführung 16a geführt ist. Wenn das Fixierelement 15 durch den Fixierelementantrieb 16 angehoben wird, wird es aus der in Fig. 5a unbetätigten Position in eine in Fig. 5c dargestellte betätigte Position verlagert. Hierbei wird es quer zur Schwerkraftrichtung aus dem Beschickungsfahrzeug 11 herausbewegt. Wenn das Fixierelement 15 wieder abgesenkt wird, wird es wieder senkrecht zur Schwerkraftrichtung in den Beschickungswagen 11 eingefahren. Dadurch kann man erreichen, dass das Fixierelement 15 nicht über die Außenkontur des Beschickungswagens 11 senkrecht zur Schwerkraftrichtung übersteht, wenn der Beschickungswagen 11 im Beschickungsraum 3 verfahren wird. Der Fixierelementantrieb 16a wirkt gleichzeitig auf zwei Fixierelemente 15. Hierzu sind die beiden Fixierelemente 15 über einen Querträger 22 miteinander verbunden. Der Querträger 22 wiederum ist in Linearführungen 23 geführt. In nicht näher dargestellter Weise kann der Fixierelementantrieb 16a auch noch eine Abdeckung aufweisen.

Das Fixierelement 15 weist eine sich verjüngende Spitze 24 auf, deren Wirkungsweise weiter unten erläutert wird. Es kann im Übrigen eine Zylinderform oder im Querschnitt eine Polygonform aufweisen.

Fig. 6 zeigt, wie ein Behälter 14 in einen Behälterstapelraum 2 eingelagert wird.

Dargestellt ist, dass sich bereits ein weiterer Behälter 25 im Behälterstapelraum 2 befindet. Dieser weitere Behälter 25 stützt sich auf den in den Ecken des Halters 9 befindlichen Halteelementen 10 ab. Dargestellt ist lediglich ein einzelnes Halteelement 10.

Das Halteelement 10 ist als zweiarmiger Hebel ausgebildet mit einem ersten Arm 26, der eine Behälteraufstandsfläche 27 aufweist, und einem zweiten Arm 28. Das Halteelement ist um eine Achse 29 verschwenkbar gelagert.

Der Halter 9 weist unterhalb des zweiten Arms 28 eine Führung 30 auf, in die das Fixierelement 15 eintreten kann, wenn es angehoben wird. Die Führung 30 ist außerhalb eines Bewegungspfades für den Behälter 14 angeordnet.

Fig. 6a zeigt die Ausgangsposition, bei der der in den Behälterstapelraum 2 einzulagernde Behälter 14 von unten an den bereits im Behälterstapelraum 2 befindlichen Behälter 25 heranbewegt wird. In Fig. 6b hat der neue Behälter 14 den bereits im Behälterstapelraum befindlichen Behälter 25 kontaktiert.

In Fig. 6c ist dargestellt, wie die beiden Behälter 14, 25 gemeinsam angehoben werden. Dabei kommt der neu einzulagernde Behälter 14 in Kontakt mit dem Halteelement 10, genauer gesagt mit dem ersten Arm 26 des Halteelements 10, und verschwenkt das Halteelement 10 aus der in den Fig. 6a bis 6c dargestellten Halteposition in die in Fig. 6d dargestellte Freigabeposition. Der Behälter 14 kann in der Freigabeposition des Halteelements 10 am Halteelement 10 vorbei bewegt werden. Hier bildet der Behälter 14 eine Betätigungseinrichtung gemeinsam mit dem Hubrahmen 12, der den Behälter 14 anhebt.

Der neu einzulagernde Behälter 14 wird durch die Hubplattform 12 des Beschickungswagens 11 weiter angehoben, bis eine Haltegeometrie 31 des Behälters 14 das Halteelement 10 passiert hat. Das Halteelement 10 kommt dann wieder zurück in die Halteposition (Fig. 7a), so dass sich der Behälter 14 auf dem Halteelement 10 abstützen kann. Ggfs. kann die Rückbewegung des Halteelements 10 aus der Freigabeposition (Fig. 6d) in die Halteposition (Fig. 7a) durch eine nicht näher dargestellte Feder unterstützt werden.

Fig. 7 zeigt, wie der Behälter 14 aus dem Behälterstapelraum entnommen wird.

Die Hubplattform 12 wird angehoben, bis sie den Behälter 14 kontaktiert. Der Behälter 14 steht dann auf der Behälteraufstandsfläche 13 auf. Das Halteelement 10 ragt in eine Aussparung 32 am unteren Ende des Behälters 14, die im Bereich der Haltegeometrie 31 angeordnet ist, hinein.

Wenn der Hubrahmen 12 weiter angehoben wird, wird zunächst die Belastung des Halteelements 10 durch den Behälter 14 aufgehoben. Das Halteelement 10 ist dann lastfrei. Wenn der Hubrahmen 12 weiter angehoben wird, kann er das Halteelement 10 in die Freigabeposition verschwenken. In diesem Fall bildet der Hubrahmen 12 die Betätigungseinrichtung alleine.

Um eine Rückbewegung des Halteelements 10 in die Halteposition zu verhindern, wenn der Hubrahmen 12 abgesenkt wird, wird in der in Fig. 7d dargestellten Position das Fixierelement 15 betätigt.

Die Wirkung ist in Fig. 8 dargestellt. Fig. 8a zeigt das Halteelement 10 in der Halteposition, in der ein Behälter 14 auf der Auflagefläche 27 des ersten Armes 26 aufliegen kann. Fig. 8b zeigt die Freigabeposition, in der das Halteelement 10 durch das Fixierelement 15 gehalten wird. Das Fixierelement 15 ist dabei durch die Führung 30 hindurchbewegt worden. Die Führung 30 kann an ihrem unteren Ende abgerundet oder konisch ausgebildet sein, um ein Einfädeln der Spitze 24 des Fixierelements 15 zu erleichtern. Durch die Führung 30 wird sichergestellt, dass das Fixierelement 15 beim Anheben zwischen dem Halter 9 und dem zweiten Arm 28 des Halteelements 10 bewegt wird. Das Fixierelement 15 wirkt dabei auf den zweiten Arm 28 und verhindert, dass der zweite Arm 28 wieder in Richtung auf den Halter 9 verschwenkt werden kann.

Anstelle des Halters 9 kann man auch andere Möglichkeiten verwenden, um das Halteelement 10 zu halten.

Der nicht näher dargestellte Hubantrieb des Hubrahmens 12 und der Fixierelementantrieb 16 sind mit einer ebenfalls nicht näher dargestellten Steuereinrichtung verbunden. Die Steuereinrichtung stellt sicher, dass das Fixierelement 15 erst dann in die in Fig. 8b dargestellte Fixierposition verfahren werden kann, wenn sich das Halteelement 10 in der Freigabeposition befindet. Dies lässt sich beispielsweise dadurch sicherstellen, dass man einen Sensor verwendet, der die Position des Halteelements 10 ermittelt, oder dadurch, dass man den Hubweg der Hubeinrichtung für den Hubrahmen 12 überwacht, wobei das Fixierelement 15 erst dann angehoben werden kann, wenn der Hubrahmen 12 soweit angehoben worden ist, dass er das Halteelement 10 in die Freigabeposition, d.h. die geöffnete Position, verschwenkt hat.

Wie man in Fig. 8 erkennen kann, liegt das Halteelement 10 mit seinem zweiten Arm 28 in der Halteposition in Schwerkraftrichtung von unten am Halter 9 an.

Der Halter 9 wird also sowohl verwendet, um eine Bewegungsbegrenzung für das Halteelement 10 in der Halteposition zu bilden, als auch dadurch, um eine Abstützung für das Fixierelement 15 zu bilden, wenn sich das Halteelement 10 in der Freigabeposition befindet. Da das Fixierelement 15 durch den Halter 9 abgestützt ist, kann es relativ schwach dimensioniert werden. Es muss lediglich in der Lage sein, den Zwischenraum zwischen dem Halter 9 und dem zweiten Arm 28 des Halteelements 10 auszufüllen, wenn sich das Halteelement 10 in der in Fig. 8b dargestellten Freigabeposition befindet.

## Patentansprüche

1. Stapellageranordnung (1) mit einer Vielzahl von Behälterstapelräumen (2), einem Beschickungsraum (3), der in Schwerkraftrichtung unterhalb der Behälterstapelräume (2) angeordnet ist, und einem im Beschickungsraum (3) bewegbaren Beschickungsfahrzeug (11), das eine Hubeinrichtung aufweist, mit der ein Behälter (14) in einen Behälterstapelraum (2) oder aus einem Behälterstapelraum (2) heraus verlagerbar ist, wobei jeder Behälterstapelraum (2) an seinem in Schwerkraftrichtung unteren Ende eine Halteeinrichtung mit mindestens einem Halteelement (10) aufweist, das durch eine am Beschickungsfahrzeug (11) angeordnete Betätigungseinrichtung zwischen einer Halteposition, in der es einen im Behälterstapelraum (2) angeordneten Behälter (14) gegen die Schwerkraft hält, und einer Freigabeposition, in der der Behälter (14) am Halteelement (10) vorbei verlagerbar ist, bewegbar ist, wobei das Beschickungsfahrzeug (11) mindestens ein in eine Fixierposition verlagerbares Fixierelement (15) aufweist, das in der Fixierposition mit einem in der Freigabeposition befindlichen Halteelement (10) zusammenwirkt und das Halteelement (10) in der Freigabeposition hält und das Halteelement (10) in einem zwischen dem Behälterstapelraum (2) und dem Beschickungsraum (3) angeordneten Halter (9) angeordnet ist, **dadurch gekennzeichnet, dass** das Fixierelement (15) in einem Zwischenraum zwischen dem in der Freigabeposition befindlichen Halteelement (10) und dem Halter (9) bewegbar ist.

2. Stapellageranordnung nach Anspruch 1, **dadurch gekennzeichnet, dass** Beschickungsfahrzeug (11) eine Steuereinrichtung aufweist, die das Fixierelement (15) betätigt, wenn sich das Halteelement (10) in der Freigabeposition befindet.

3. Stapellageranordnung nach Anspruch 1 oder 2, **dadurch gekennzeichnet, dass** das Halteelement (10) als zweiarmiger Hebel mit einem ersten Arm (26), der eine Auflagefläche (27) für einen Behälter aufweist, und einem zweiten Arm (28) ausgebildet ist und das Fixierelement (15) auf den zweiten Arm wirkt.

4. Stapellageranordnung nach einem der Ansprüche 1 bis 3, **dadurch gekennzeichnet, dass** das Fixierelement (15) eine sich verjüngende Spitze (24) aufweist.

5. Stapellageranordnung nach Anspruch 4, **dadurch gekennzeichnet, dass** der Halter (9) eine Führung (30) für das Fixierelement (15) aufweist.

6. Stapellageranordnung nach Anspruch 5, **dadurch gekennzeichnet, dass** die Führung (30) einen Kanal aufweist, der unterhalb des Halteelements (10) und außerhalb eines Behälterbewegungspfades angeordnet ist.

7. Stapellageranordnung nach einem der Ansprüche 1 bis 6, **dadurch gekennzeichnet, dass** das Fixierelement (15) in einer unbetätigten Position senkrecht zur Schwerkraftrichtung weniger weit über das Beschickungsfahrzeug (11) vorsteht als in einer betätigten Position.

8. Stapellageranordnung nach Anspruch 7, **dadurch gekennzeichnet, dass** das Fixierelement (15) in einer am Beschickungsfahrzeug (11) ausgebildeten Kurvenführung (16) geführt ist.

9. Stapellageranordnung nach einem der Ansprüche 1 bis 8, **dadurch gekennzeichnet, dass** die Hubeinrichtung einen Hubrahmen (12) mit einer Behälteraufstandsfläche (13) aufweist, wobei der Hubrahmen (12) zumindest einen Teil der Betätigungseinrichtung bildet.

## Claims

1. Stack storage assembly (1) having a plurality of container stacking spaces (2), a charging space (3) which is arranged below the container stacking spaces (2) in the direction of gravity, and a charging vehicle (11) which can be moved in the charging space (3) and has a lifting device with which a container (14) can be displaced into a container stacking space (2) or out of a container stacking space (2), wherein each container stacking space (2) has, at its lower end in the direction of gravity, a holding device with at least one holding element (10) which, by means of an actuating device arranged on the charging vehicle (11), can be moved between a holding position in which it holds a container (14) arranged in the container stacking space (2) against the force of gravity, and a release position in which the container (14) can be displaced past the holding element (10), wherein the charging vehicle (11) has at least one fixing element (15) which can be displaced into a fixing position, which in the fixing position cooperates with a holding element (10) located in the release position and holds the holding element (10) in the release position and the holding element (10) is arranged in a holder (9) arranged between the container stacking space (2) and the charging space (3), **characterized in that** the fixing element (15) is movable in an intermediate space between the holding element (10) located in the release position and the holder (9).

2. Stack storage assembly according to claim 1, **characterized in that** the charging vehicle (11) has a control device which actuates the fixing element (15) when the holding element (10) is in the release position.

3. Stack storage assembly according to claim 1 or 2, **characterized in that** the holding element (10) is designed as a two-armed lever with a first arm (26), which has a support surface (27) for a container, and a second arm (28), and the fixing element (15) acts on the second arm.

4. Stack storage assembly according to one of claims 1 to 3, **characterized in that** the fixing element (15) has a tapered tip (24).

5. Stack storage assembly according to claim 4, **characterized in that** the holder (9) has a guide (30) for the fixing element (15).

6. Stack storage assembly according to claim 5, **characterized in that** the guide (30) has a channel which is arranged below the holding element (10) and outside a container movement path.

7. Stack storage assembly according to one of claims 1 to 6, **characterized in that** the fixing element (15) protrudes less far above the charging vehicle (11) in an unactuated position perpendicular to the direction of gravity than in an actuated position.

8. Stack storage assembly according to claim 7, **characterized in that** the fixing element (15) is guided in a cam guide (16) formed on the charging vehicle (11).

9. Stack storage assembly according to one of claims 1 to 8, **characterized in that** the lifting device has a lifting frame (12) with a container contact surface (13), the lifting frame (12) forming at least part of the actuating device.

## Revendications

1. Agencement de couches d'empilage (1) avec une pluralité d'espaces d'empilage de conteneurs (2), un espace de chargement (3), qui est disposé en direction de la force de gravité en dessous des espaces d'empilage de conteneurs (2), et un véhicule de chargement (11) déplaçable dans l'espace de chargement (3), qui comporte un système de levage avec lequel un conteneur (14) peut être déplacé dans un espace d'empilage de conteneurs (2) ou hors d'un espace d'empilage de conteneurs (2), sachant que chaque espace d'empilage de conteneurs (2) comporte à son extrémité inférieure en direction de la force de gravité, un système de maintien avec au moins un élément de retenue (10), qui peut être déplacé par un système d'actionnement disposé sur le véhicule de chargement (11) entre une position de maintien, dans laquelle il retient contre la force de gravité un conteneur (14) disposé dans l'espace d'empilage de conteneurs (2) et une position de libération, dans laquelle le conteneur (14) peut être déplacé en le passant sur l'élément de retenue (10), sachant que le véhicule de chargement (11) comporte au moins un élément de fixation (15) déplaçable dans une position de fixation, qui coopère dans la position de fixation avec un élément de retenue (10) se trouvant dans la position de libération et l'élément de retenue (10) retient dans la position de libération et l'élément de retenue (10) est disposé dans un support (9) disposé entre l'espace d'empilage de conteneurs (2) et l'espace de chargement (3), **caractérisé en ce que** l'élément de fixation (15) peut être déplacé dans un espace intermédiaire entre l'élément de retenue (10) se trouvant dans la position de libération et le support (9) .

2. Agencement de couches d'empilage selon la revendication 1, **caractérisé en ce que** le véhicule de chargement (11) comporte un dispositif de commande, qui actionne l'élément de fixation (15), lorsque l'élément de retenue (10) se trouve dans la position de libération.

3. Agencement de couches d'empilage selon la revendication 1 ou 2, **caractérisé en ce que** l'élément de retenue (10) est constitué sous la forme d'un levier à deux bras avec un premier bras (26), qui comporte une surface de dépose (27) pour un conteneur, et un deuxième bras (28) et l'élément de fixation (15) agit sur le deuxième bras.

4. Agencement de couches d'empilage selon l'une quelconque des revendications 1 à 3, **caractérisé en ce que** l'élément de fixation (15) comporte une pointe se réduisant (24).

5. Agencement de couches d'empilage selon la revendication 4, **caractérisé en ce que** le support (9) comporte un guidage (30) pour l'élément de fixation (15).

6. Agencement de couches d'empilage selon la revendication 5, **caractérisé en ce que** le guidage (30) comporte un conduit, qui est disposé en dessous de l'élément de retenue (10) et en dehors d'une trajectoire de déplacement de conteneur.

7. Agencement de couches d'empilage selon l'une quelconque des revendications 1 à 6, **caractérisé en ce que** l'élément de fixation (15) fait saillie perpendiculairement à la direction de la force de gravité dans une position non actionnée légèrement plus au-dessus du véhicule de chargement (11) que dans une position actionnée.

8. Agencement de couches d'empilage selon la revendication 7, **caractérisé en ce que** l'élément de fixation (15) est guidé dans un guidage courbe (16) constitué sur le véhicule de chargement (11).

9. Agencement de couches d'empilage selon l'une quelconque des revendications 1 à 8, **caractérisé en ce que** le système de levage comporte un cadre de levage (12) avec une surface de dépose de conteneur (13), sachant que le cadre de levage (12) forme au moins, une partie du système d'actionnement.
